# EUROPEAN PATENT SPECIFICATION

(11) **EP 4 286 219 B1**
(45) Date of publication and mention of the grant of the patent: **22.10.2025**
(21) Application number: 22176668.6
(22) Date of filing: 01.06.2022
(51) Int. Cl.: B60Q 1/00, H02J 50/10

(54) **LIGHT ELEMENT FOR A VEHICLE**
BELEUCHTUNGSVORRICHTUNG FÜR EIN FAHRZEUG
DISPOSITIF D'ÉCLAIRAGE POUR UN VÉHICULE

(43) Date of publication of application: 06.12.2023
(73) Proprietor: Hella Autotechnik Nova, s.r.o., 78985 Mohelnice (CZ)
(72) Inventor: Tucek, Pavel, 78985 Mohelnice (CZ)
(74) Representative: Behr-Wenning, Gregor

(56) References cited:
- JP-A- 2015 215 995
- KR-A- 20180 062 090
- US-A1- 2019 009 738
- US-B2- 7 566 984
- US-B2- 9 466 988

## Description

### Technical Field

The present invention relates to lighting elements for cars, suitable for the exterior, such as lit emblems or vehicle model designation, as well as for the interior. Specifically, it relates to a lighting element powered by wireless energy transmission through the body, trim or other part of the car.

### Background of the Invention

In the current state of the art, light elements such as lit emblems or signs are known to be placed externally on the body of a car. A hole in the body is required to provide power to such an element. All the electronics, including the light source, can then be placed on the inside of the body so that the light passes through the hole in the body to the emitting part of the element. It is also possible to just thread the power cable through the hole and place the other components, especially the light source, outside. The main disadvantage of these solutions is mainly the necessity of this hole in the body - creating the hole means an additional work operation, creating a place prone to water leakage or corrosion, and it is also an irreversible intervention in the body. An example of such a light element is described in document US2012256543A1. There are also known batterypowered light elements placed directly in such an element, but for such solutions, battery replacement or charging is necessary for long-term use.

It would therefore be advisable to come up with a solution that would make it possible to provide a lit decorative element on the surface of the car part without having to damage the body or trim in the given place. Document US9466988 B2 discloses an illumination device according to the preamble of claim 1. KR20180062090 A discloses an illumination device using wireless power transfer to power their light sources. These devices can thus be used to provide exterior illumination on vehicles without the need for through holes through the corresponding vehicle surfaces. These devices are however quite large and are not very suitable for decorative lamps.

### Summary of the Invention

The shortcomings of the solutions known in the prior art are to some extent eliminated by a light element for a vehicle for attachment to a vehicle part according to the preamble of claim 1, element comprising an energy supply, a luminescent material, and an element for excitation of the luminescent material. The shape of the lit part of the light element, i.e., for example the logo of the car manufacturer, is then determined by the shape of the luminescent material and/or the shape of any cover element. The luminescent material may be in the form of a layer applied to a translucent element, such as a cover element, in which case the luminescent material may be applied in the form of a paint or coating. It is also possible to use luminescent material in the form of a block of material, which therefore does not have to be applied to anything. The luminescent material comprises carbon (quantum / nano) dots (carbon dots, C-dots). Any material that emits visible light when irradiated with ultraviolet (UV) radiation (e.g., 100-400 nm, generally up to 5-400 nm), exposed to an (electro)magnetic field, etc. can be used. UV radiation, in particular UV-A, is most preferably used for excitation.

The light element is divided into a receiving part, intended to be attached to the external surface of the vehicle part, i.e., to the surface on the side on which the light element is to shine and intended to emit visible light, and a transmitting part, intended to power the receiving part and to be attached to the inner surface of the vehicle part opposite the receiving part. The transmitting part generates a variable electromagnetic field and the receiving part converts this field on the other side of the element into voltage that can be used to power the element for excitation, e.g. a UV source. The part of the vehicle may be, for example, the body or a body part, for example on the trunk lid, the front bonnet or on the doors, the interior trim or a part thereof, a part of the dashboard, etc. The energy supply is part of the transmitting part and the transmitting part further comprises a transmitting coil for generating an electromagnetic field coupled to the energy supply. The element for excitation and the luminescent material are part of the receiving part, which further comprises a receiving coil for inducing voltage by the electromagnetic field generated by the transmitting coil. The receiving coil is coupled to the element for excitation, preferably indirectly - for example via a power circuit providing rectification and smoothing of the supplied voltage. Preferably, both coils are flat coils, i.e., coils with windings arranged such that the width and height, or diameter, of the coil significantly, e.g., at least 20 times or at least 50 times, exceed the length of the coil. Such coils are used in wireless chargers, usually with all windings arranged concentrically in one plane. There can be multiple transmitting and/or receiving coils, all supplying/inducing voltage simultaneously and/or individually, e.g., depending on user control.

The operating frequency of the transmitting coil, i.e., the frequency of the supplied current, can be similar as, for example, for wireless charging according to the Qi standard, between 80 and 300 kHz, but can be also higher. The frequency is chosen mainly with regard to the coil size and the required power. The transmitted power in the present invention may also be significantly lower than is usual for phone chargers, for example it may be 10-100 mW. With lower power, smaller coils can be used, which may require the use of a higher frequency. However, for larger light elements, for example containing a larger number of UV LEDs, the power may be higher, for example in the order of units or tens of W. The power of the transmitting coil may furthermore be chosen with respect to the distance between the receiving and transmitting coils and the type of material between them.

Thus, the present invention enables, for example, the light element to be mounted on a car body, a radiator grille, or in the interior, either in series production or individually according to the wishes of a particular user, without the need to disrupt the given surface, e.g., the body. The external receiving part of the light element does not have to be any larger than standard lit emblems known from the state of the art. The use of luminescent material ensures continuous shining of the light element, although the element for excitation may operate intermittently to some extent. Thanks to the luminescent material, the energy consumption is less than if the light were emitted by LEDs emitting directly visible light, for example. Another advantage of the invention is the easy customization of the light elements. The car manufacturer's logo or model designation, which are standard on the car from the factory, can be easily replaced by an individually selected light element, and only the receiving part needs to be replaced, i.e., for example, it needs to be peeled off and a new one glued on, with the shape of the lit part according to the customer's choice.

In the interior, for example, several transmitting parts can be embedded in the wall, ceiling, floor, dashboard, etc., at the factory and the receiving parts can be selected by each user according to their needs. These may be purely decorative elements, for example, but also practical elements, such as lighting of a post with a seat belt buckle for easier orientation in the dark, threshold or roadway lighting when the door is opened, etc. The light element of the invention may be ambient interior lighting, for example, automatically switched on when the door is unlocked or opened. Ambient lighting is usually found on the dashboard, around the pedals, around handles, gloveboxes, etc.

In particular, the energy supply may be a car battery or a cable leading to the car battery, for example the present invention may be connected to a cable supplying the marker lights or daytime running lights, preferably a separate cable is provided for the present invention independent of any other system in the vehicle. In general, however, it is possible, for example, to power a lit emblem on the trunk lid with a battery recharged from a solar panel provided behind the glass of the trunk lid or embedded in the glass (transparent solar panel).

The luminescent material is preferably photoluminescent, adapted for excitation by UV radiation, wherein the element for excitation is then a UV source, such as a UV diode or an array of UV diodes. A particularly preferable luminescent material is carbon dots. The color of the emitted light is then determined by the size of the carbon dots - the exact shade can be selected according to the specific application of the light element or the user's requirement.

The light element for a vehicle may further comprise a cover element formed at least in part of a translucent material. For example, it can be made of PMMA, polycarbonate, glass, etc. For example, it may also be formed in part from a non-translucent plastic. It can also serve as a shading element to define the desired form of the lit part of the light element, i.e., for example to create an illuminated sign or logo. Preferably the cover element comprises a UV filter. This ensures that daylight falling on the light element does not cause excitation of the luminescent material, so that the material only lights up when excited by a UV source.

The cover element may surround the luminescent material on one side only, in the direction of the light of the light element, but may also surround it on more than one side. For example, the cover element may form an external cover for the entire receiving part, for example, it may be translucent on a part of its surface and black or chrome on another part. The cover element can thus provide protection of internal electronic components from water or dirt. At the same time, the cover element also provides a design function, both when the light element is not lit and when it is lit. It may comprise, for example, homogenizing elements for light passing from the luminescent material. The cover element may also be provided on the transmitting part, this cover element may be entirely non-translucent.

The luminescent material can also be magnetoluminescent, i.e., a material that emits visible light when exposed to a magnetic field can be used. For example, it is possible to use magnetoluminescent carbon dots. The element for excitation is then an electromagnet, for example another coil. Such a luminescent material may be also provided with at least partially translucent cover element, in particular to ensure mechanical resistance, protection against dirt and water and also to improve the appearance, especially in the off state of the light element.

The luminescent material may include a transparent polymer, wherein the carbon dots are dispersed in the polymer. For example, carbon dots can be used in combination with PMMA or polycarbonate, for example in injection molding. The translucent polymer can therefore be doped with carbon dots with sufficient heat resistance. When the polymer solidifies, a solid piece of material is formed which is itself translucent because the dots are invisible to the naked eye, but emits visible light after excitation. Therefore, the luminescent material can also form the cover element or a part of it, it can form a light guide, etc.

The light element for a vehicle preferably further comprises a control unit adapted to regulate the current supplied to the transmitting coil. This regulation is at least a selection of the on or off state, which then corresponds to the switching on and off of the light emission by the light element. However, more complex control is also possible, especially modulation, which allows the electromagnetic field, or the signal generated by the transmitting coil, to transmit information, in addition to energy, i.e., the force/power component of the signal.

The control unit is preferably adapted to modulate the signal transmitted by the transmitting coil, wherein the receiving part comprises a demodulation element. Thus, not only the supply energy is transmitted between the two coils, but also the data component for controlling the receiving part, for verification of the transmitting part, etc. In particular preferably, modulation and demodulation are used to verify the transmitting part, so that it is ensured in the receiving part that only the electromagnetic field generated by the transmitting part results in lighting up the receiving part. Thus, for example, it is possible to use an identification code modulated to the amplitude of the voltage in the transmitting coil and demodulated in the transmitting part to verify that the electromagnetic field that excites the voltage in the receiving coil is generated by the transmitting coil and not by some other source. The demodulation element can then verify in its control unit that the received code corresponds to the preset code and only then enable the power supply to the element for excitation. This prevents the luminescent material from being lit by a possible electromagnetic field from another source. A wireless phone charger, for example, will not unwantedly light up the interior, which could distract the driver. Similarly, instructions can be transmitted for regulation, for example, of the intensity of the lighting or for determination of which elements for excitation should be switched on and which not. For example, it is then possible to light up the sign letter by letter or to light up a decorative light line on the ceiling or dashboard in sequence. Preferably modulation which does not change the frequency is used. Information can also be transmitted back from the receiving part to the transmitting part, a principle known as backscatter.

The demodulation element is thus preferably adapted to regulate the power supply to the element for excitation. In particular, it is adapted at least for switching it on and off, but more complex control is also possible, for example as described above.

Preferably, the control unit is adapted to process the signal from the CAN or LIN bus. These buses are standard in modern cars, so adapting the light element so that it can be controlled and possibly powered by a CAN bus or LIN bus will facilitate the installation of the light element, or its connection to the car and its control. However, it is more preferable to provide the energy supply separately from the control, e.g., CAN bus. The protocols for CAN (Controller Area Network) buses are, for example, ISO 11898-1, ISO 11898-2, ISO 11898-3, ISO 11898-4. The LIN bus (Local Interconnect Network) is based, among other things, on the ISO 9141 standard.

In principle, however, it is possible, for example, to use only the existing power cable, especially for some lights, as an energy supply so that the light element is lit just when the light is on, without the light element being controlled in any other way. Any modulation may then transmit, for example, only the identification data of the transmitting part or may not occur at all. Particularly, for light elements on the exterior of the vehicle, the risk of exposure to an electromagnetic field source other than the transmitting part is relatively low and any unwanted lighting of the light element, especially if it is a decorative element, does not endanger the driver or other road users, so modulation for verification does not have to be used for such elements. For example, instead of the buses mentioned above, it is possible to use a so-called PoE (Power Over Ethernet) system for the control and power supply of the light element of the invention, especially if such a system is already integrated into the given vehicle.

Particularly preferably the transmitting part and/or the receiving part, preferably both, comprise an adhesive layer for attachment to the given vehicle part. Bonding is the most practical method for attachment to the body and often to the trim, and is standard for emblems and vehicle model designations in the state of the art. Thus, any adhesive suitable for bonding standard emblems can be used for bonding both parts of the present invention to the body. Any adhesive suitable for bonding to plastic or other trim or dashboard material can then be used for interior bonding. In the interior, however, it is possible to attach at least the receiving part located inside the passenger compartment with, for example, a magnet or hook-and-loop fastener.

The transmitting and/or receiving part preferably comprise a flexible printed circuit board that allows some components, such as the coil, UV source, power circuit, etc., to be placed also on curved surfaces. Particularly preferable may be use of such a printed circuit board for a coil, for example at least a coil of the receiving part. It is thus possible, for example, to reduce the distance between the receiving and transmitting parts, or their coils, because these parts can be tightly fitted to the curved surfaces of the car part. The most common material for the flexible printed circuit boards is polyimide.

### Description of Drawings

A summary of the invention is further clarified using exemplary embodiments thereof, which are described with reference to the accompanying drawings, in which:
- fig. 1: schematically shows the light element of the present invention, wherein a transmitting part, a receiving part, their individual components, and the surface of the body which separates the two parts, are shown, in
- fig. 2: schematically shows the transmitting part of the light element, and
- fig. 3: schematically shows the receiving part of the light element.

### Exemplary Embodiments of the Invention

The invention will be further clarified using exemplary embodiments with reference to the respective drawings.

The object of the present invention is a light element for attachment on a vehicle part. This light element comprises an energy supply 2, and a luminophore, i.e., a luminescent material 4, which emits visible light when excited, usually by electromagnetic radiation or a field. Further, the light element comprises an element for excitation of the luminescent material 4. The power supply for the element for excitation is realized by wireless power transmission to enable the energy to be supplied through the surface of the vehicle part without cutting a hole for the cable or light passage. The light element comprises an internal transmitting part 6 which contains the energy supply 2, e.g., a cable leading to a car battery, and is used to generate an electromagnetic field, and further comprises an external receiving part 7 which induces an electrical voltage in this field to power the element for excitation and any other electronic components.

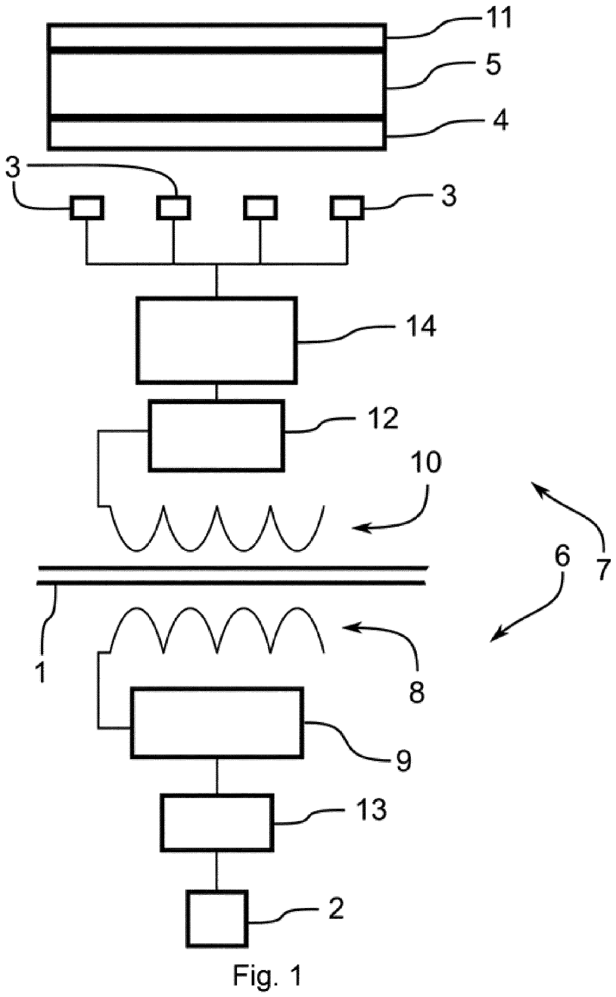

In the embodiment of fig. 1, the vehicle part is the body 1 of the car. The element for excitation of the luminescent material 4 is a UV source 3, in particular one or more UV LEDs, and the luminescent material 4 is therefore the UV-excited material. The luminescent material 4 is preferably provided with a cover element 5 to protect it from water, dirt, etc.

The transmitting part 6 is adapted to be attached to an internal surface of the body 1, for example a trunk lid or a front bonnet. It comprises the energy supply 2, transmitting coil 8, and control unit 9, which regulates the amount of current passing through the transmitting coil 8, i.e., at least whether or not the current passes through the coil, but preferably also the parameters of this current, i.e., amplitude, possibly frequency, etc. Further, the transmitting part 6 may comprise standard components of transmitters for wireless charging such as an inverter, a foreign object detector, and the like. The receiving part 7 is adapted to be attached to an external surface of the body 1. It comprises a receiving coil 10, electronic components for processing the induced voltage, such as a rectifier, filter capacitors, etc., and further comprises light components, in particular a UV source 3, luminescent material 4, and cover element 5. The cover element 5 may surround the entire receiving part 7 and provide waterproofing, mechanical resistance, dust resistance, etc. The voltage induced in the receiving coil 10 is then applied to the UV source 3, which is directed to the luminescent material 4 to emit visible light.

The type of the selected luminescent material 4, its quantity, and the shape in which it is arranged, and possibly also the shape of the transparent/shielding part of the cover element 5 then provide the desired form of the light element. For example, a waterbased photoluminescent paint can be used; the luminescent materials are sold on the market as, for example, photoluminescent paint or carbon dots, or as blacklight paint, etc. These are usually, for example, a phosphor compound with an additional admixture such as arsenic, gallium or chlorine, or fluorescent materials with an internal carbon core. The composition and optionally the thickness of the layer of this material then influence its color. It is also possible, for example, to use a material, such as carbon dots, that emits light in two or more colors depending on the radiation it is excited by - for example, UV or infrared radiation. The element for excitation may then comprise two types of radiation sources, for example the UV source 3 and IR source, and the information from the demodulation element 12 then determines which source is on. The UV source 3 may be, for example, a UV LED or an array of such LEDs. The UV source 3 may be directed directly at the luminescent material 4 or may be directed into a light guide which may irradiate the material or may be provided with it on its surface for light output. It is possible, for example, to add carbon dots to the material of such a light guide or other translucent element irradiated by the UV source 3. The luminescent material 4 may be arranged in a layer of uniform thickness having a shape corresponding, for example, to a desired logo or sign. The cover element 5 may be transparent, for example made of PMMA or polycarbonate, and preferably comprises a UV filter 11 to prevent excitation of the luminescent material 4 due to sunlight. Thus, for example, the cover element 5 may be made, for example, by injection molding from PMMA. The UV filter 11 may subsequently be applied to the internal side of the cover element 5, and a layer of luminescent material 4 may subsequently be applied thereto. The resulting cover element 5 can then be attached in front of the UV source 3.

Both the receiving coil 10 and the transmitting coil 8 are preferably flat coils such as those used in wireless phone charging. They may each consist of a single coil or a plurality of coils. A flat coil, for example, may have all the windings located concentrically in one plane. For example, the coils used may have a size of 2-3 cm, i.e., they may be smaller than it is usual for wireless chargers, since the power transfer requirements may be relatively small for the present invention due to the use of LEDs. The specific power that the coils must be able to transfer between each other depends, among other things, on the UV source 3 used, e.g., the number and type of LEDs, and the thickness and material of the body 1. The transmitting coil 8 may be larger than the receiving coil 10, for example, the receiving coil 10 may be formed by etching it into a printed circuit board to provide the smallest possible size of the external receiving part of the invention. Preferably, both the transmitting part 6 and the receiving part 7 are at least partially implemented on the flexible printed circuit boards to facilitate their attachment, in particular their bonding, to the corresponding opposite locations on the body 1. The shape of the coils used can also be influenced by the thickness and material of the body 1, for example its (electro)magnetic conductivity.

Preferably, the control unit 9 contained in the transmitting part 6 is adapted to modulate the signal, so that the generated electromagnetic field serves not only for transmitting energy but also for transmitting information. The receiving part 7 then preferably comprises the demodulation element 12 to process this information. A power circuit 14 of the receiving part 7, which comprises, for example, a rectifier, can then be controlled by this demodulation element 12. Said information may then include, for example, an identification code, and the demodulation element 12 may include a computing unit that verifies the code and allows power to be supplied to the UV source 3 only upon receipt of the correct code. This ensures that the light element is lit only when powered by the dedicated transmitting part 6. Based on the transmitted information, it is possible to provide more complex regulation of the lighting of the UV source 3 than just switching it on and off. For example, the lighting intensity can be regulated in this way, it can be possible to turn on only a part of the LED to influence the form of the lit light element, etc. Frequency-invariant modulation is preferably used to transmit the information, as changes in frequency could have a negative impact on the efficiency of the power transmission.

The control unit 9 of the transmitting part 6 is preferably intended to be connected to standard buses 13 used in cars for communication between individual electronic components. The CAN bus 13 is the most used bus, often in combination with the LIN buses 13, for example for communication with individual subsystems such as air conditioning, door control, seat control, etc. The control unit 9 may directly supply the transmitting coil 8 or may only regulate its supply from the energy supply 2.

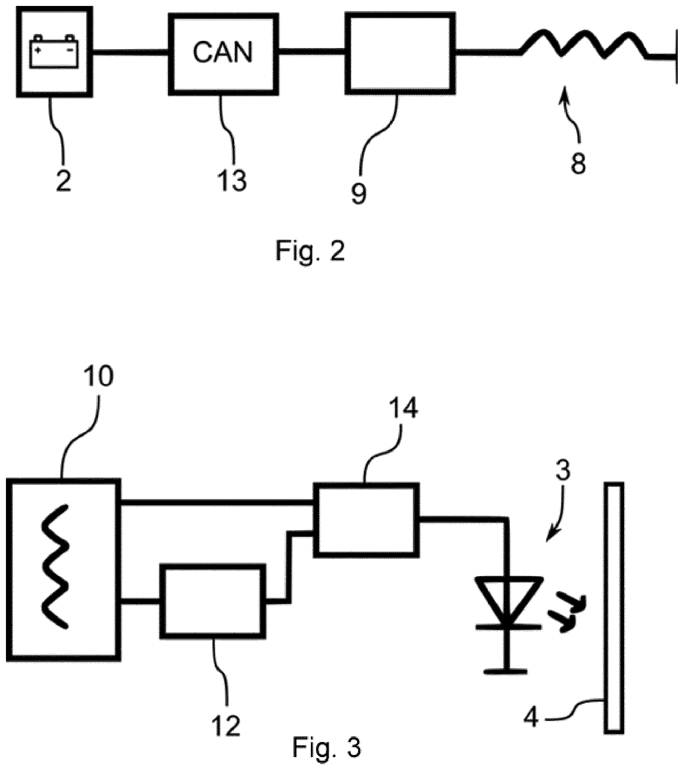

The transmitting part 6 is shown schematically in fig. 2. The energy supply 2 is implemented as a car battery, the supplied energy for the transmitting part 6 can be transmitted directly via the bus 13 or can be supplied also separately. The control unit 9 can then switch the power supply to the transmitting coil 8 on and off based on the data from the bus 13. Any modulation may be provided directly by the control unit 9 or by a separate component forming a transmitting circuit together with the transmitting coil 8.

The receiving part 7 is shown schematically in fig. 3. The voltage from the receiving coil 10 is supplied to the power circuit 14, which basically processes only the power component of the voltage, or signal from the coil, and also to the demodulation element 12, which obtains control information from the form of this voltage and controls (switches on/off) the power circuit 14. For example, a DC voltage is then supplied from the power circuit 14 to the UV LEDs used to illuminating the layer or block of luminescent material 4.

The entire light element of the invention is then illustrated in one exemplary embodiment in the schematic drawing of fig. 1. On the internal side of the body 1 there is the transmitting part 6 with the energy supply 2. The bus 13 may be considered as part of the transmitting part 6, or the transmitting part 6 may be only connected to the bus 13. The energy supply 2 can be implemented via bus 13, but alternatively it can be connected in parallel to it. The control unit 9 then processes the instructions from the user or the car control unit supplied via the bus 13 and provides excitation of the electromagnetic field, preferably carrying both the power and data components, by the transmitting coil 8 provided as close as possible to the body 1. The receiving coil 10 is provided on the outside of the body 1, aligned as closely as possible with the transmitting coil 8 and provided as close as possible thereto. The voltage from the receiving coil 10 is processed by the demodulation element 12, which may directly supply the power circuit 14 or may only control it, wherein the voltage is supplied to the power circuit 14 in parallel to the demodulation element 12, as indicated in fig. 3. The power circuit 14 can then supply all or only some of the UV sources 3 to light up a part of the light element as needed. In fig. 1, the cover element 5 is also a support element for the layer of the UV filter 11, which may be on the internal and external side of the cover element 5, and for the layer of the luminescent material 4. Thus, the luminescent material 4 can also be applied to the UV filter 11, with the cover element 5 representing the outermost part of the light element. However, both the UV filter 11 and the luminescent material 4 may alternatively have another support element or may be formed so that they do not need another support element.

The luminescent material 4 may be in one piece or may be divided into a plurality of discontinuous parts. For example, in case of text indicating a vehicle model, each letter may be made up of an individual light element or one element may be made up of several letters. The transmitting part 6 may also be common to more than one such light element. Each letter may have its own UV source 3, its own piece of luminescent material 4, its own cover element 5, etc. In some embodiments, the layer of luminescent material 4 may be continuous and the light element is divided into a plurality of parts by the shielding part of the cover element 5. In some embodiments, the transmitting part 6 may comprise a plurality of transmitting coils 8 placed side-by-side or partially overlapping to power the light element, for example, in the form of text, having a length substantially greater than width/height.

Instead of being bonded to the body, in some embodiments the internal part 6 may be mounted, for example by glue, screws, welding, etc., for example to a trim running along the internal surface of the body.

Alternatively, the luminescent material 4 may be, for example, magnetoluminescent. In such an embodiment, the element for excitation may be an electromagnet. For example, the receiving coil 10 and the power circuit 14 provide power to the electromagnet coil analogically to the embodiment described above with the UV source 3, preferably using modulation to prevent unwanted lighting of the light element by a magnetic field the source of which is not the transmitting coil 8. The receiving and transmitting coil can then operate at a different frequency than the excitation coil of the electromagnet. Other features of the invention may then be implemented, for example as described above.

Instead of being attached to the body 1 to form an external light element, the light element may be intended to be placed in the interior. For example, the transmitting part 6 may be embedded in the ceiling, door trim, or dashboard, and the receiving part 7 is then attached in the interior on an external surface (i.e., facing the passenger compartment, not e.g., the body) of the vehicle part. For example, the light element can be decorative interior lighting, ceiling lighting, lighting around the door when getting in, side lighting in the luggage compartment, etc. Other features of the invention may then be, for example, as in any of the above embodiments.

### List of Reference Signs

- 1: - Body
- 2 -: Energy supply
- 3 -: UV source
- 4 -: Luminescent material
- 5 -: Cover element
- 6 -: Transmitting part
- 7 -: Receiving part
- 8 -: Transmitting coil
- 9 -: Control unit
- 10 -: Receiving coil
- 11 -: UV filter
- 12 -: Demodulation element
- 13: - Bus
- 14 -: Power circuit

## Claims

1. A light element for a vehicle designed to be attached to a vehicle part, wherein the element comprises an energy supply (2) and is divided into a receiving part (7), designed to be attached to an external surface of the given vehicle part and to emit light, and a transmitting part (6) designed to power the receiving part (7) and to be attached to an internal surface of the given vehicle part opposite the receiving part (7), wherein the energy supply (2) is part of the transmitting part (6) and the transmitting part (6) further comprises a transmitting coil (8) for generating an electromagnetic field coupled to the energy supply (2), **characterized in that** the light element further comprises a luminescent material (4), and an element for excitation of the luminescent material, wherein the element for excitation and the luminescent material (4) are part of the receiving part (7), which further comprises a receiving coil (10) for inducing voltage by the electromagnetic field generated by the transmitting coil (8), wherein the receiving coil (10) is coupled to the element for excitation, wherein the luminescent material (4) comprises carbon dots.

2. The light element for a vehicle of claim 1, **characterized in that** the luminescent material (4) is a UV excitation material, wherein the element for excitation is a UV source (3).

3. The light element for a vehicle of claim 2, **characterized in that** it further comprises a cover element (5) at least partially formed of a translucent material and at least partially surrounding the luminescent material (4), wherein the cover element (5) comprises a UV filter (11).

4. The light element for a vehicle of claim 1, **characterized in that** the luminescent material (4) is magnetoluminescent, wherein the element for excitation is an electromagnet.

5. The light element for a vehicle according to any one of the preceding claims, **characterized in that** the luminescent material (4) further comprises a translucent polymer, wherein the carbon dots are dispersed in the polymer.

6. The light element for a vehicle of any one of the preceding claims, **characterized in that** it comprises a control unit (9) adapted to regulate the current supplied to the transmitting coil (8).

7. The light element for a vehicle of claim 6, **characterized in that** the control unit (9) is adapted to modulate signal transmitted by the transmitting coil (8), wherein the receiving part (7) comprises a demodulation element (12).

8. The light element for a vehicle of claim 7, **characterized in that** the demodulation element (12) is adapted to regulate power supply to the element for excitation.

9. The light element for a vehicle of any one of the preceding claims, **characterized in that** the transmitting part (6) and/or the receiving part (7) comprises an adhesive layer for attachment to the surface of the given vehicle part.

10. The light element for a vehicle of any one of the preceding claims, **characterized in that** the transmitting part (6) and/or the receiving part (7) comprises a flexible printed circuit board.

## Patentansprüche

1. Beleuchtungsvorrichtung für ein Fahrzeug, dazu gestaltet, an einem Fahrzeugteil angebracht zu sein, wobei die Vorrichtung eine Energieversorgung (2) umfasst und in ein Empfangsteil (7), dazu gestaltet, an einer Außenfläche des betreffenden Fahrzeugteils angebracht zu sein und Licht zu emittieren, und ein Sendeteil (6), dazu gestaltet, das Empfangsteil (7) mit Energie zu versorgen und an einer Innenfläche des betreffenden Fahrzeugteils, gegenüber dem Empfangsteil (7), angebracht zu sein, geteilt ist, wobei die Energieversorgung (2) Teil des Sendeteils (6) ist und das Sendeteil (6) ferner eine Sendespule (8) zum Erzeugen eines elektromagnetischen Feldes, gekoppelt mit der Energieversorgung (2), umfasst, **dadurch gekennzeichnet, dass** die Beleuchtungsvorrichtung ferner einen Leuchtstoff (4) und ein Element zur Anregung des Leuchtstoffs umfasst, wobei das Element zur Anregung und der Leuchtstoff (4) Teil des Empfangsteils (7) sind, das ferner eine Empfangsspule (10) zum Induzieren von Spannung durch das von der Sendespule (8) erzeugte elektromagnetische Feld umfasst, wobei die Empfangsspule (10) mit dem Element zur Anregung gekoppelt ist, wobei der Leuchtstoff (4) Kohlenstoffpunkte umfasst.

2. Beleuchtungsvorrichtung für ein Fahrzeug nach Anspruch 1, **dadurch gekennzeichnet, dass** der Leuchtstoff (4) ein UV-anregbarer Stoff ist, wobei das Element zur Anregung eine UV-Quelle (3) ist.

3. Beleuchtungsvorrichtung für ein Fahrzeug nach Anspruch 2, **dadurch gekennzeichnet, dass** sie ferner ein Abdeckungselement (5) umfasst, das mindestens teilweise aus einem lichtdurchlässigen Material ausgebildet ist und das lichtdurchlässige Material (4) mindestens teilweise umgibt, wobei das Abdeckungselement (5) ein UV-Filter (11) umfasst.

4. Beleuchtungsvorrichtung für ein Fahrzeug nach Anspruch 1, **dadurch gekennzeichnet, dass** der Leuchtstoff (4) ein magnetisch und lumineszierend ist, wobei das Element zur Anregung ein Elektromagnet ist.

5. Beleuchtungsvorrichtung für ein Fahrzeug nach einem der vorhergehenden Ansprüche, **dadurch gekennzeichnet, dass** der Leuchtstoff (4) ferner ein lichtdurchlässiges Polymer umfasst, wobei die Kohlenstoffpunkte in dem Polymer dispergiert sind.

6. Beleuchtungsvorrichtung für ein Fahrzeug nach einem der vorhergehenden Ansprüche, **dadurch gekennzeichnet, dass** sie ein Steuergerät (9), dazu ausgelegt, den der Sendespule (8) zugeführten Strom zu regulieren, umfasst.

7. Beleuchtungsvorrichtung für ein Fahrzeug nach Anspruch 6, **dadurch gekennzeichnet, dass** das Steuergerät (9) dazu ausgelegt ist, ein von der Sendespule (8) gesendetes Signal zu modulieren, wobei das Empfangsteil (7) ein Demodulationselement (12) umfasst.

8. Beleuchtungsvorrichtung für ein Fahrzeug nach Anspruch 7, **dadurch gekennzeichnet, dass** das Demodulationselement (12) zum Regulieren der Spannungsversorgung des Elements zur Anregung ausgelegt ist.

9. Beleuchtungsvorrichtung für ein Fahrzeug nach einem der vorhergehenden Ansprüche, **dadurch gekennzeichnet, dass** das Sendeteil (6) und/oder das Empfangsteil (7) eine Klebstoffschicht zum Anbringen an der Oberfläche des betreffenden Fahrzeugteils umfassen.

10. Beleuchtungsvorrichtung für ein Fahrzeug nach einem der vorhergehenden Ansprüche, **dadurch gekennzeichnet, dass** das Sendeteil (6) und/oder das Empfangsteil (7) eine flexible Leiterplatte umfassen.

## Revendications

1. Dispositif d'éclairage pour un véhicule conçu pour être fixé à une partie du véhicule, le dispositif comprenant une alimentation en énergie (2) et étant divisé en une partie réceptrice (7) conçue pour être fixée à une surface externe de la partie correspondante du véhicule et émettre de la lumière et une partie émettrice (6) conçue pour alimenter la partie réceptrice (7) et être fixée à une surface interne de la partie correspondante du véhicule en face de la partie réceptrice (7), l'alimentation en énergie (2) faisant partie de la partie émettrice (6) et la partie émettrice (6) comprenant en outre une bobine de transmission (8) conçue pour générer un champ électromagnétique couplé à l'alimentation en énergie (2), **caractérisé en ce que** le dispositif d'éclairage comprend en outre un matériau luminescent (4) et un élément d'excitation du matériau luminescent, l'élément d'excitation et le matériau luminescent (4) faisant partie de la partie réceptrice (7) qui comprend en outre une bobine de réception (10) pour induire une tension par le champ électromagnétique généré par la bobine de transmission (8), la bobine de réception (10) étant couplée à l'élément d'excitation, le matériau luminescent (4) étant constitué de points de carbone.

2. Le dispositif d'éclairage pour un véhicule selon la revendication 1, **caractérisé en ce que** le matériau luminescent (4) est un matériau d'excitation UV, l'élément utilisé pour l'excitation étant une source UV (3).

3. Le dispositif d'éclairage pour un véhicule selon la revendication 2, **caractérisé en ce qu'**il comprend en outre un élément de couverture (5) au moins partiellement constitué d'un matériau translucide et entourant au moins partiellement le matériau luminescent (4), l'élément de couverture (5) comprenant un filtre UV (11).

4. Le dispositif d'éclairage pour un véhicule selon la revendication 1, **caractérisé en ce que** le matériau luminescent (4) est magnéto-luminescent, l'élément utilisé pour l'excitation étant un électro-aimant.

5. Le dispositif d'éclairage pour un véhicule selon l'une des revendications précédentes, **caractérisé en ce que** le matériau luminescent (4) comprend en outre un polymère translucide, les points de carbone étant dispersés dans le polymère.

6. Le dispositif d'éclairage pour un véhicule selon l'une des revendications précédentes, **caractérisé en ce qu'**il comprend une unité de commande (9) conçue pour réguler le courant fourni à la bobine de transmission (8).

7. Le dispositif d'éclairage pour un véhicule selon la revendication 6, **caractérisé en ce que** l'unité de commande (9) est conçue pour moduler le signal transmis par la bobine de transmission (8), la partie réceptrice (7) comprenant un élément de démodulation (12).

8. Le dispositif d'éclairage pour un véhicule selon la revendication 7, **caractérisé en ce que** l'élément de démodulation (12) est conçu pour réguler l'alimentation électrique de l'élément d'excitation.

9. Le dispositif d'éclairage pour un véhicule selon l'une des revendications précédentes, **caractérisé en ce que** la partie émettrice (6) et/ou la partie réceptrice (7) comprend une couche adhésive destinée à être fixée à la surface de la partie correspondante du véhicule.

10. Le dispositif d'éclairage pour un véhicule selon l'une des revendications précédentes, **caractérisé en ce que** la partie émettrice (6) et/ou la partie réceptrice (7) comprend une carte de circuit imprimé souple.
